# EUROPÄISCHE PATENTANMELDUNG

(11) **EP 3 216 546 A1**
(43) Veröffentlichungstag der Anmeldung: **13.09.2017**
(21) Anmeldenummer: 17159007.8
(22) Anmeldetag: 02.03.2017
(51) Int. Cl.: B22F 3/105, B29C 67/00, B33Y 10/00, B33Y 30/00

(54) **MIKROSCHMIEDEN BEI EINEM GENERATIVEN HERSTELLUNGSVERFAHREN**

(30) Priorität: 07.03.2016 DE 102016203649
(71) Anmelder: MTU Aero Engines AG, 80995 München (DE)
(72) Erfinder: Bamberg, Joachim, 85221 Dachau (DE); Hessert, Roland, 82211 Herrsching (DE); Schlick, Georg, 80809 München (DE)

(57) **Zusammenfassung**

Die vorliegende Erfindung betrifft eine Vorrichtung sowie ein Verfahren zur generativen Herstellung von Bauteilen durch Abscheiden von Materiallagen durch schichtweises Verbinden von Pulverpartikeln untereinander und/oder mit einem bereits erzeugten Halbzeug oder Substrat durch selektive Wechselwirkung der Pulverpartikel mit einem hochenergetischen Strahl, wobei zur Glättung einer quer zu den abgeschiedenen Materiallagen verlaufenden Oberfläche des herzustellenden Bauteils zwischen dem Abscheiden von zwei Lagen des Bauteils der vollständige Randbereich der zuletzt aufgebrachten Lage, der entlang einer Oberfläche des herzustellenden Bauteils verläuft, in einer Wirkrichtung, die einen Wirkrichtungsanteil parallel zur Aufbaurichtung der Lagen aufweist, mittels Lasererschütterungsverdichtung oder Ultraschalleinwirkungsbehandlung verdichtet wird und/oder mindestens ein Randbereich (19) zu einer Oberfläche des Bauteils (3') in einer Wirkrichtung, die einen Wirkrichtungsanteil parallel zur Normalen der Oberfläche aufweist, mittels Lasererschütterungsverdichtung oder Ultraschalleinwirkungsbehandlung verdichtet wird.

## Beschreibung

### HINTERGUND DER ERFINDUNG

### GEBIET DER ERFINDUNG

Die vorliegende Erfindung betrifft ein Verfahren und eine Vorrichtung zur generativen oder additiven Herstellung von Bauteilen durch schichtweises Verbinden von Pulverpartikeln untereinander und/oder mit einem bereits erzeugten Halbzeug oder Substrat durch selektive Wechselwirkung der Pulverpartikel mit einem hochenergetischen Strahl, insbesondere ein Verfahren und eine Vorrichtung zum selektiven Laser - oder Elektronenstrahlschmelzen.

### STAND DER TECHNIK

Generative Herstellungsverfahren zur Herstellung eines Bauteils, wie beispielsweise selektives Laserschmelzen, selektives Elektronenstrahlschmelzen oder Laserauftragsschweißen, bei denen das Bauteil schichtweise unter Einsatz von Pulvermaterial aufgebaut wird, werden in der Industrie für das sogenannte rapid tooling, rapid prototyping oder auch für die Herstellung von Serienprodukten im Rahmen des rapid manufacturing eingesetzt. Insbesondere können derartige Verfahren auch zur Herstellung von Turbinenteilen, insbesondere von Teilen für Flugzeugtriebwerke eingesetzt werden, bei denen beispielsweise auf Grund des verwendeten Materials derartige generative Herstellungsverfahren vorteilhaft sind. Ein Beispiel hierfür findet sich in der DE 10 2010 050 531 A1.

Zur Verbesserung eines derartigen Verfahrens ist es beispielsweise aus der WO 2012/152259 A1 bekannt, die aufgebrachten Schichten oder Materiallagen nach dem Aufschmelzen und Wiedererstarren des Pulvers nachzuarbeiten, um die Mikrostruktur des abgeschiedenen Materials zu beeinflussen. Dies kann beispielsweise durch eine Ultraschalleinwirkungsbehandlung (ultrasonic impact treatment UIT) oder durch eine Lasererschütterungsverdichtung (laser shock peening LSP) erfolgen.

Bei der generativen Herstellung mit einem schichtweisen Aufbringen von Material kann es an den Rändern der abgeschiedenen Materiallagen, die eine innenliegende (Hohlräume) oder außenliegende (Außenseite) Oberfläche des herzustellenden Bauteils darstellen, zur Oberflächenrauheit und Ausbildung von Fehlstellen in Form von Poren und Mikrorissen kommen.

Um diese Fehlstellen zu vermeiden ist es bekannt die Randbereiche der abgeschiedenen Materiallagen nachzuschweißen, d. h. noch einmal umzuschmelzen, um einen möglichst glatten Randbereich zu erhalten. Darüber hinaus kann die Oberfläche des herzustellenden Bauteils durch Schleifen oder Polieren geglättet werden, um zu vermeiden, dass durch Oberflächenrauheit und Fehlstellen in der Oberfläche negative Auswirkungen auf die Festigkeit, insbesondere Schwingungsfestigkeit gegeben sind.

Allerdings ergibt sich weiterhin das Problem, dass die Oberflächen des additiv oder generativ hergestellten Bauteils häufig für die Nachbearbeitungswerkzeuge nicht oder nicht mehr bzw. schwer zugänglich sind, insbesondere wenn es sich innenliegende Oberflächen von Hohlräumen handelt. Außerdem ist eine Nachbearbeitung der Oberflächen durch Schleifen und Polieren häufig aufwändig, insbesondere wenn ein hoher Materialabtrag eingestellt werden muss, um Fehlstellen, wie Poren oder Mikrorisse in der Oberfläche oder oberflächennahen Bereichen zu beseitigen.

### OFFENBARUNG DER ERFINDUNG

### AUFGABE DER ERFINDUNG

Es ist deshalb Aufgabe der vorliegenden Erfindung, ein Verfahren und eine Vorrichtung zur generativen Herstellung von Bauteilen durch schichtweises Verbinden von Pulverpartikeln untereinander und/oder mit einem bereits erzeugten Halbzeug oder Substrat durch selektive Wechselwirkung der Pulverpartikel mit einem hochenergetischen Strahl bereitzustellen, bei denen die oben geschilderten Problem vermieden bzw. zumindest verringert werden. Gleichwohl soll das Verfahren einfach durchführbar und die Vorrichtung einfach aufgebaut und bedienbar sein, um die entsprechende generative Herstellung in industriellen Prozessen einsetzen zu können.

### TECHNISCHE LÖSUNG

Diese Aufgabe wird gelöst durch ein Verfahren mit den Merkmalen des Anspruchs 1 und eine Vorrichtung mit den Merkmalen des Anspruchs 13. Vorteilhafte Ausgestaltungen sind Gegenstand der abhängigen Ansprüche.

Zur Lösung der oben geschilderten Aufgabe schlägt die vorliegende Erfindung vor, bereits während des Verfahrens zur generativen Herstellung von Bauteilen, den Randbereich zu einer Oberfläche des Bauteils durch Lasererschütterungsverdichtung (Laser Shock Peaning LSP) oder Ultraschalleinwirkungsbehandlung (Ultrasonic Impact Treatment UIT) zu verdichten. Durch das Verdichten können Fehlstellen, wie Mikrorisse oder Poren in den Randbereichen beseitigt werden. Außerdem sind während der additiven Herstellung sämtliche Oberflächenbereiche des Bauteils noch zugänglich, sodass eine entsprechende Bearbeitung erfolgen kann. Die Verdichtung während des generativen Herstellungsverfahrens, also zwischen zwei Abscheidungsvorgängen von entsprechenden Materiallagern hat darüber hinaus den Vorteil, dass durch die der Verdichtung des Randbereichs folgenden Abscheidung einer weiteren Materiallage eine Wärmebehandlung für die bereits abgeschiedenen Materiallagen und entsprechend verdichteten Randbereiche stattfindet, sodass ein feinkörniges Gefüge in den Randbereichen erzeugt wird.

Die Verdichtung kann so erfolgen, dass in einer Wirkrichtung verdichtet wird, die einen Wirkrichtungsanteil parallel zur Aufbaurichtung der Materiallagen und/oder parallel zur Normalen der Oberfläche aufweist. Die Wirkrichtung der Verdichtung bedeutet hierbei die Richtung in welcher die Laserpulse bei einer Lasererschütterungsverdichtung bzw. ein mit Ultraschallfrequenz hin und her bewegtes Werkzeug bei der Ultraschalleinwirkungsbehandlung auf das zu verdichtende Material einwirken. Bei einem schräg auf die Oberfläche des Bauteils oder auf die Ebene einer Materiallage einwirkenden Laserpuls oder Ultraschallwerkzeug kann die Wirkrichtung im Sinne einer Vektoraddition in entsprechende senkrecht zueinander stehende Anteile aufgeteilt werden, die parallel und senkrecht zu der jeweiligen Oberfläche oder Ebene stehen. Die Aufbaurichtung des Bauteils bzw. der Materiallagen ist hierbei die Richtung, in der eine Materiallage nach der anderen abgeschieden wird, also die Richtung senkrecht zur Ebene der Materiallage.

Vorteilhaft kann die Verdichtung von der Stirnseite der Materiallagen bzw. der Seite der quer zu den Materiallagen verlaufenden Oberfläche des Bauteils vorgenommen werden, sodass der Laserstrahl oder ein Bearbeitungswerkzeug direkt auf die Oberfläche des Bauteils einwirken und eine Wirkrichtung der Verdichtung einen Wirkrichtungsanteil parallel zur Normalen der Oberfläche aufweist, da dadurch nicht nur eine Verdichtung des Randbereichs und ein geeignetes Gefüge des Randbereichs eingestellt und Fehlstellen, wie Mikrorisse und Poren, im Randbereich beseitigt oder vermieden werden können, sondern die unterschiedlichen Lagen an ihren Stirnseiten noch besser geglättet und miteinander verzahnt werden können.

Die Lasererschütterungsverdichtung bzw. Ultraschalleinwirkungsbehandlung zur Verdichtung eines oberflächennahen Randbereichs zwischen dem Abscheiden von zwei Lagen des Bauteils kann ausschließlich im Randbereich zu einer Oberfläche des Bauteils erfolgen und insbesondere entlang des gesamten Randbereichs einer abgeschiedenen Materiallage bzw. entlang des gesamten Umfangs sämtlicher Oberflächen des herzustellenden Bauteils. Unter Randbereich wird hierbei ein Bereich verstanden, der über einen Abstand vom Rand der abgeschiedenen Materiallage oder der Oberfläche des herzustellenden Bauteils definiert ist, der insbesondere kleiner oder gleich fünf, vorzugsweise kleiner oder gleich zwei Werkzeugbreiten des verwendeten Werkzeugs ist, also des Durchmessers des gepulsten Laserstrahls oder eines Ultraschallwerkzeugs einer Ultraschalleinwirkungseinrichtung. Der Randbereich kann auch durch die Einwirkungstiefe des verwendeten Werkzeugs definiert sein.

Die Verdichtung des oder der oberflächennahen Randbereiche des Bauteils kann nach der Abscheidung jeder Lage oder jeder zweiten, dritten oder vierten Lage oder nach dem Abscheiden mehrerer Lagen durchgeführt werden.

Nach jeder Lasererschütterungsverdichtung oder Ultraschalleinwirkungsbehandlung kann die Abscheidung einer weiteren Materiallage erfolgen, um durch die Abscheidung der weiteren Materiallage eine entsprechende Wärmebehandlung des verdichteten Bereichs zu bewirken. Darüber hinaus kann das Bauteil nach Fertigstellung einer zusätzlichen Wärmebehandlung unterzogen werden, um ein gewünschtes Gefüge, wie z.B. ein Schmiedegefüge, insbesondere unter Berücksichtigung der vorgenommenen Materialverdichtung zu bewerkstelligen.

Die Verdichtung des Randbereichs zu einer Oberfläche mit einem Wirkrichtungsanteil parallel zur Normalen der Oberfläche kann insbesondere durch eine Ultraschalleinwirkungsbehandlung erzeugt werden, bei der ein auf die Oberfläche des Bauteils einwirkendes Werkzeug linear mit einer Frequenz im Ultraschallbereich hin und her bewegt wird, wobei ein Richtungsanteil der Linearbewegung parallel zur Oberflächennormale verläuft.

Das für die Ultraschalleinwirkungsbehandlung verwendete Werkzeug, das auf die Oberfläche des Bauteils einwirkt, kann aus einem Material gebildet sein, das zu dem Material, aus dem das Bauteil aufgebaut wird, identisch ist oder zumindest ähnlich ist. Unter ähnlich wird hierbei verstanden, dass die Materialien derselben Werkstoffklasse angehören oder demselben Legierungstyp entsprechen oder quantitativ und/oder qualitativ in ihrer chemischen Zusammensetzung zu mehr als 50%, vorzugsweise zu mehr als 75%, insbesondere zu mehr als 90% übereinstimmen. Unter qualitativer Übereinstimmung wird hierbei verstanden, dass mehr als 50%, vorzugsweise mehr als 75%, insbesondere mehr als 90% der Legierungsbestandteile übereinstimmen, während mit quantitativer Ähnlichkeit bzw. Übereinstimmung die entsprechende Übereinstimmung des Volumen - oder Gewichtsanteils der entsprechenden Werkstoffbestandteile verstanden wird.

Entsprechend kann eine Vorrichtung zur generativen Herstellung von Bauteilen mindestens eine Ultraschalleinwirkungseinrichtung zur Durchführung einer Ultraschalleinwirkungsbehandlung aufweisen, die ein Ultraschallwerkzeug zur Einwirkung auf das herzustellende Bauteil aufweist und die so ausgebildet ist, dass das Werkzeug im Bearbeitungsbereich verfahrbar ist, sodass beliebig geformte Bauteile im Bearbeitungsbereich der Vorrichtung an ihrer Oberfläche bearbeitbar sind.

Wird zur generativen Herstellung ein Pulverbett vorgesehen, kann die Ultraschalleinwirkungseinrichtung bzw. das entsprechende Werkzeug so ausgebildet sein, dass das Werkzeug im Pulverbett angeordnet und betrieben werden kann.

### KURZBESCHREIBUNG DER FIGUREN

Die beigefügten Zeichnungen zeigen in rein schematischer Weise in
- Fig. 1: eine schematische Darstellung einer Vorrichtung zur generativen Herstellung von Bauteilen am Beispiel des selektiven Laserschmelzens,
- Fig. 2: eine Draufsicht auf das herzustellende Bauteil während einer Ultraschalleinwirkungsbehandlung,
- Fig. 3: eine Schnittansicht durch das auf dem Hubtisch angeordnete, bereits erzeugte Bauteil während der Ultraschalleinwirkungsbehandlung gemäß Fig. 2,
- Fig. 4: eine Draufsicht auf das bereits hergestellte Bauteil 3 während einer zweiten Art der Ultraschalleinwirkungsbehandlung und in
- Fig. 5: eine Schnittansicht durch ein modifiziertes Bauteil während der Ultraschalleinwirkungsbehandlung gemäß Fig. 4.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen deutlich, wobei die Erfindung nicht auf diese Ausführungsbeispiele beschränkt ist.

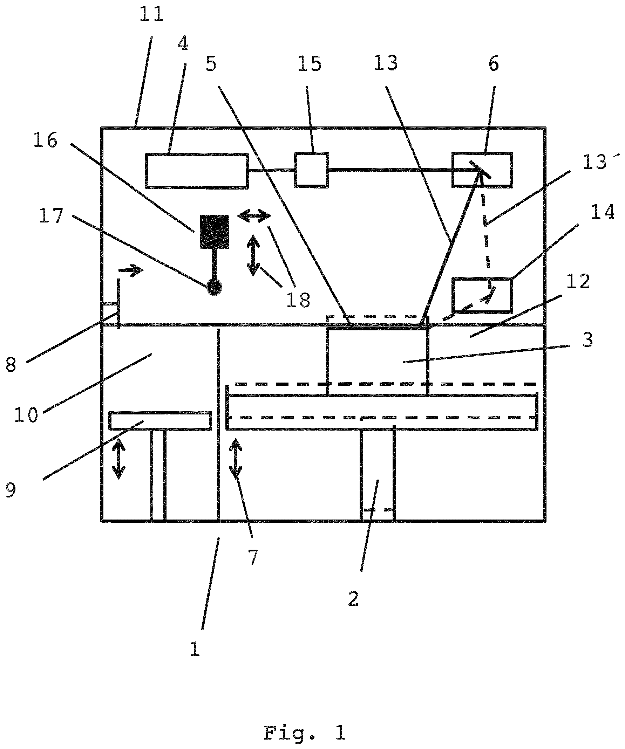

Die Figur 1 zeigt in einer rein schematischen Darstellung eine Vorrichtung 1, wie sie beispielsweise für das selektive Laserschmelzen zur generativen Herstellung eines Bauteils Verwendung finden kann. Die Vorrichtung 1 umfasst in einem Gehäuse 11 einen Hubtisch 2, auf dessen Plattform ein Halbzeug 3 angeordnet ist, auf dem schichtweise Material abgeschieden wird, um ein dreidimensionales Bauteil zu erzeugen. Hierzu wird mittels des Schiebers 8 Pulver, das sich oberhalb eines Hubtisches 9 in einem Pulvervorrat 10 befindet, schichtweise über das Halbzeug 3 geschoben und anschließend durch den Laserstrahl 13 eines Lasers 4 durch Aufschmelzen mit dem bereits vorhandenen Halbzeug 3 verbunden. Nach vollständiger Aufbringung einer Pulverschicht 5 wird der Hubtisch 2 entsprechend der mit dem Pfeil 7 angedeuteten Bewegungsmöglichkeit abgesenkt, um mit dem Schieber 8 eine neue Pulverschicht 5 aufbringen zu können.

Die Verbindung des Pulvermaterials der Pulverschicht 5 mit dem Halbzeug 3 erfolgt durch den Laser 4 abhängig von der gewünschten Kontur des zu fertigenden Bauteils, sodass beliebige, dreidimensionale Formen erzeugt werden können. Entsprechend wird der Laserstrahl 13 über das Pulverbett 12 geführt, um durch unterschiedliche Auftreffpunkte auf dem Pulverbett entsprechend der Kontur des dreidimensionalen Bauteils in der der Pulverschichtebene entsprechenden Schnittebene des zu erzeugenden Bauteils Pulvermaterial aufzuschmelzen und mit dem bereits erzeugten Teil eines Bauteils oder einem anfänglich bereit gestellten Substrat zu verbinden. Hierbei kann der Laserstrahl 13 durch eine geeignete Ablenkeinheit 6 über die Oberfläche des Pulverbetts 12 geführt werden und/oder das Pulverbett könnte gegenüber dem Laserstrahl 13 bewegt werden.

Zwischen dem Laser 4 und der Ablenkeinheit 6 ist ein so genannter Q - Schalter 15 vorgesehen, der die Erzeugung von Hochleistungs - Laserpulsen entsprechend dem sogenannten Q - Switching ermöglicht. Das sogenannte Q - Switching zur Erzeugung von Hochleistungs - Laserpulsen ist im Stand der Technik bekannt und beispielsweise in Frank B. A. Früngel, Optical Pulses-Lasers - Measuring Techniques, Academic Press, Seite 192, ISBN 9781483274317, 2014 und ursprünglich von Gordon Gould und R. B. Hellwarth und F. J. McClung beschrieben (siehe Nick Taylor, Laser: The inventor, the Nobel Laureate and the Thirty-Year Patent War, New York, Simon & Schuster, ISBN 0-684-83515-0, Seite 93 und McClung, FJ, Hellwarth, R. B., Giant Optical Pulsation from Ruby, Journal of Applied Physics, 33(3), Seite 828 - 829, 1962).

Während beim normalen selektiven Laserschmelzen der Q - Schalter 15 ausgeschaltet ist und der Laserstrahl 13 zum Aufschmelzen des Pulvers führt, kann durch Einschalten des Q - Schalters 15 eine Lasererschütterungsverdichtung (Laser Shock Peening) bewirkt werden, bei der das entsprechende Material mikrogeschmiedet wird.

Um die Lasererschütterungsverdichtung an einer seitlichen Oberfläche des bereits hergestellten Bauteils 3 vornehmen zu können, kann eine zweite Ablenkeinheit 14 vorgesehen sein, mit der der Laserstrahl 13' in Form von Laserpulsen auf die seitliche Oberfläche des Bauteils 3 gelenkt werden kann, welches wie in der gestrichelten Darstellung gezeigt, zur Lasererschütterungsverdichtung aus dem Pulverbett 12 angehoben werden kann.

Darüber hinaus weist die Vorrichtung 1 eine Ultraschalleinwirkungseinrichtung 16 auf, bei der ein Werkzeug 17 Hin - und Her - Bewegungen mit einer Frequenz im Ultraschallbereich ausführen kann, wobei das Werkzeug in Kontakt mit dem Bauteil gebracht werden kann, sodass das Werkzeug 17 auf die Oberfläche des Bauteils 3 einwirken kann. Um das Werkzeug 17 an jeden Bereich des Bauteils 3 zum Einsatz bringen zu können, ist die Ultraschalleinwirkungseinrichtung 16 entsprechend beweglich angeordnet, um beispielsweise translatorische Bewegungen entsprechend der Pfeile 18 durchführen zu können. Darüber hinaus kann die Ultraschalleinwirkungseinrichtung 16 auch um mindestens eine oder mehrere Drehachsen verdrehbar sein, um eine entsprechende Ausrichtung und Orientierung des Werkzeugs 17 zu ermöglichen.

Mit der in Fig. 1 schematisch gezeigten Vorrichtung können somit sowohl eine Ultraschalleinwirkungsbehandlung als auch eine Lasererschütterungsverdichtung vorgenommen werden. Selbstverständlich kann eine entsprechende Vorrichtung lediglich für eine Lasererschütterungsverdichtung oder eine Ultraschalleinwirkungsbehandlung ausgebildet werden.

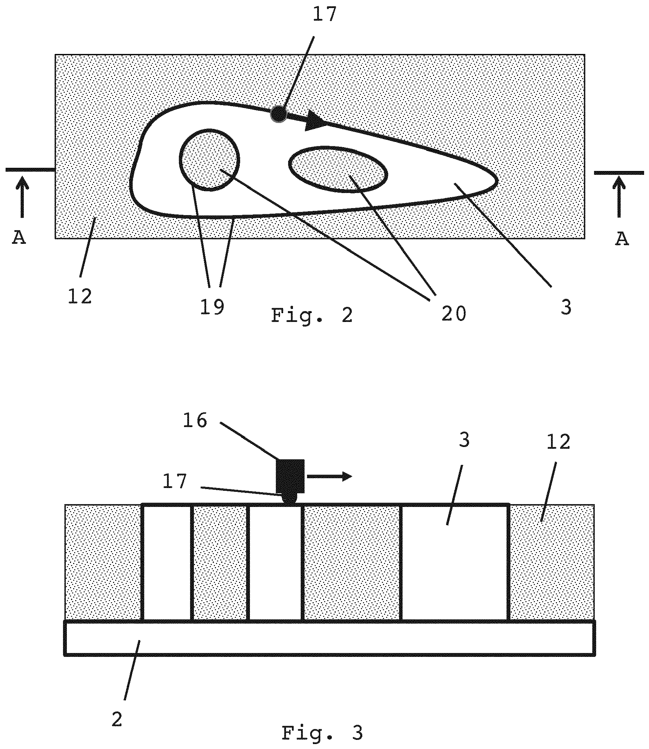

Die Fig. 2 zeigt in einer Draufsicht ein bereits hergestelltes Bauteil 3, wie es beispielsweise in der Vorrichtung 1 der Fig. 1 hergestellt werden kann. In der Fig. 2 ist zu erkennen, dass das Bauteil 3 zwei Hohlräume 20 aufweist, in denen entsprechend auch das Pulverbett 12 vorliegt.

In der Fig. 2 ist dargestellt, wie ein Randbereich 19 zu einer Oberfläche des Bauteils 3 mittels Ultraschalleinwirkungsbehandlung verdichtet werden kann, um bei einer nachfolgenden Abscheidung einer weiteren Materiallage auf dem Bauteil 3 und die dadurch entsprechend eingebrachte Wärme beim Aufschmelzen des Pulvers ein feinkörniges Gefüge zu erzeugen und Fehlstellen wie Poren und Mikrorisse zu vermeiden.

Die Fig. 2 sowie die im Schnitt entlang der Schnittlinie A - A aus Fig. 2 dargestellte Schnittansicht der Fig. 3 zeigen, dass der Randbereich 19 in Form der Umfangslinie des Bauteils 3 bzw. der Hohlräume 20 dadurch verfestigt werden kann, dass die Ultraschalleinwirkungseinrichtung 16 bzw. deren Werkzeug 17 entlang der Umfangslinie des Bauteils 3 bzw. der Hohlräume 20 verfahren wird und gleichzeitig mit einer Frequenz im Ultraschallbereich oszilliert wird und von oben auf das Bauteil 3 bzw. die zuletzt abgeschiedene Lage einwirkt. Dadurch wird der Randbereich 19 des Bauteils 3 verdichtet und bei der Abscheidung einer weiteren Lage im nächsten Verfahrensschritt kommt es durch die entsprechende Erwärmung durch das Aufschmelzen der Pulverlage zu einer feinkörnigen Gefügeausbildung im Randbereich 19.

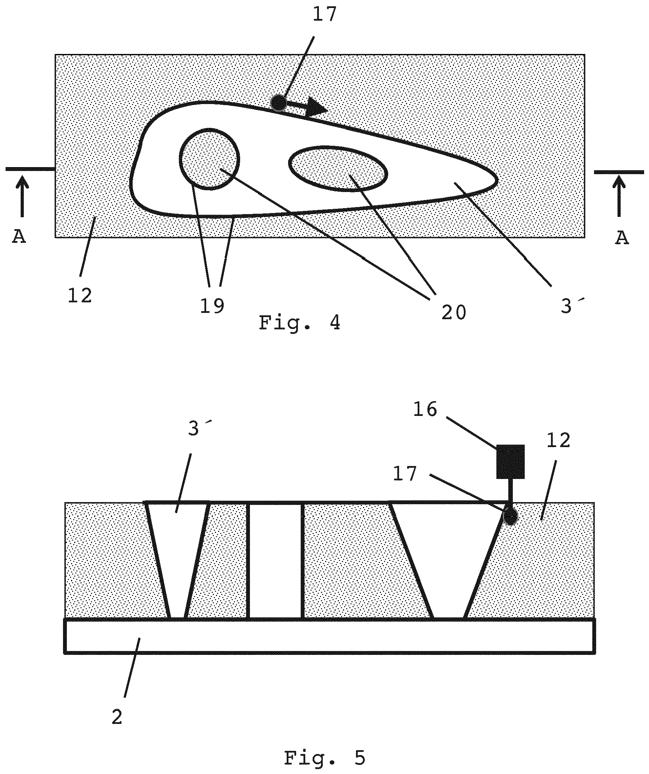

Eine alternative Variante zur Verdichtung des Randbereichs an einer Oberfläche eines generativ herzustellenden Bauteils ist in den Fig. 4 und 5 gezeigt. Die Fig. 4 und 5 entsprechen grundsätzlich der Darstellung der Fig. 2 und 3, wobei jedoch ein leicht abgewandeltes Bauteil 3' zu sehen ist, welches, wie aus der Darstellung der Fig. 5 deutlich wird, nach unten abfallende Seitenwände im Bereich der äußeren Oberfläche des Bauteils 3' und der Begrenzung der Hohlräume 20 aufweist. Bei der in den Fig. 4 und 5 dargestellten Ausführungsform erfolgt die Randschichtverdichtung durch eine Ultraschalleinwirkungsbehandlung unmittelbar durch Einwirkung des Werkzeugs 17 auf die Oberfläche des Bauteils 3'. Entsprechend ist das Werkzeug 17 nicht mehr so wie in den Fig. 2 und 3 angeordnet, dass es auf die zuletzt abgeschiedene Materiallage des bereits hergestellten Bauteils 3 einwirkt, sondern ist seitlich des Bauteils 3' angeordnet und wirkt auf die Oberfläche des Bauteils 3' bzw. die Seitenflächen der abgeschiedenen Lagen des Bauteils 3' ein.

Bei dem in der Fig. 5 gezeigten Ausführungsbeispiel ist das Werkzeug 17 in Form eines Kugelkopfs im Pulverbett 12 angeordnet und führt dort eine oszillierende Hin - und Her - Bewegung mit einer Frequenz im Ultraschallbereich aus, wobei bei jedem Hub des Werkzeugs 17 nach oben die Kugel in Kontakt mit der Oberfläche des bereits hergestellten Bauteils 3' gelangt, um so eine Ultraschalleinwirkungsbehandlung vorzunehmen.

Allerdings ist es auch vorstellbar, dass die Ultraschalleinwirkungseinrichtung 16 mit dem Werkzeug 17 so angeordnet wird, dass durch die lineare Hin - und Her - Bewegung eine Einwirkung auf die Oberfläche des Bauteils 3' parallel zur Normalen der Oberfläche stattfindet, also beispielsweise die Ultraschalleinwirkungseinrichtung 16 mit dem Werkzeug 17 der Fig. 5 nach rechts gedreht ist.

Anstelle der in den Fig. 2 bis 5 dargestellten Ultraschalleinwirkungsbehandlung ist es selbstverständlich auch möglich, eine Lasererschütterungsverdichtung vorzunehmen. Anstelle des Werkzeugs 17, welches auf das Bauteil 3 bzw. 3' einwirkt, wird dann entsprechend der Vorrichtung der Fig. 1 ein entsprechender Laserstrahl im Form von Laserpulsen auf das Bauteil 3 bzw. 3' einwirken.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Änderungen in der Weise möglich sind, dass einzelne Merkmale weggelassen oder andersartige Kombinationen von Merkmalen verwirklicht werden können, solange der Schutzbereich der beigefügten Ansprüche nicht verlassen wird. Die vorliegende Offenbarung schließt sämtliche Kombinationen der vorgestellten Einzelmerkmale mit ein.

### DEFINITIONEN

Die bei der vorliegenden Beschreibung verwendeten Begriffe wie "oben", "unten", "rechts", "links", "seitlich" usw. sind in Bezug auf die bereitgestellten Figuren zu verstehen und beziehen sich auf diese.

### BEZUGSZEICHENLISTE

- 1: Vorrichtung zum selektiven Laserschmelzen
- 2: Hubtisch
- 3: Halbzeug
- 4: Laser
- 5: Schicht
- 6: Ablenkeinheit
- 7: Bewegung des Hubtisches
- 8: Schieber
- 9: Hubtisch
- 10: Pulvervorrat
- 11: Gehäuse
- 12: Pulverbett
- 13: Laserstrahl
- 13': Laserstrahl
- 14: Ablenkeinheit
- 15: Q - Schalter
- 16: Ultraschalleinwirkung seinrichtung
- 17: Werkzeug
- 18: Bewegungsmöglichkeiten der Ultraschalleinwirkungseinrichtung bzw. des Werkzeugs
- 19: Randbereich
- 20: Hohlraum

## Patentansprüche

1. Verfahren zur generativen Herstellung von Bauteilen durch Abscheiden von Materiallagen durch schichtweises Verbinden von Pulverpartikeln untereinander und/oder mit einem bereits erzeugten Halbzeug oder Substrat durch selektive Wechselwirkung der Pulverpartikel mit einem hochenergetischen Strahl (13),
**dadurch gekennzeichnet, dass**
zur Glättung einer quer zu den abgeschiedenen Materiallagen verlaufenden Oberfläche des herzustellenden Bauteils zwischen dem Abscheiden von zwei Lagen des Bauteils der vollständige Randbereich (19) der zuletzt aufgebrachten Lage, der entlang einer Oberfläche des herzustellenden Bauteils verläuft, in einer Wirkrichtung, die einen Wirkrichtungsanteil parallel zur Aufbaurichtung der Lagen aufweist, mittels Lasererschütterungsverdichtung oder Ultraschalleinwirkungsbehandlung verdichtet wird und/oder mindestens ein Randbereich (19) zu einer Oberfläche des Bauteils in einer Wirkrichtung, die einen Wirkrichtungsanteil parallel zur Normalen der Oberfläche aufweist, mittels Lasererschütterungsverdichtung oder Ultraschalleinwirkungsbehandlung verdichtet wird.

2. Verfahren nach Anspruch 1,
**dadurch gekennzeichnet, dass**
die Verdichtung in einer Wirkrichtung mit einem Wirkrichtungsanteil parallel zur Normalen der Oberfläche von der Seite der Oberfläche des Bauteils erfolgt.

3. Verfahren nach einem der vorhergehenden Ansprüche,
**dadurch gekennzeichnet, dass**
die Lasererschütterungsverdichtung oder Ultraschalleinwirkungsbehandlung zwischen dem Abscheiden von zwei Lagen des Bauteils ausschließlich im Randbereich zu einer Oberfläche des Bauteils erfolgt

4. Verfahren nach einem der vorhergehenden Ansprüche,
**dadurch gekennzeichnet, dass**
nach jeder Lasererschütterungsverdichtung oder Ultraschalleinwirkungsbehandlung eine Abscheidung einer Lage erfolgt.

5. Verfahren nach einem der vorhergehenden Ansprüche,
**dadurch gekennzeichnet, dass**
nach dem Abscheiden jeder Lage oder jeder zweiten, dritten oder vierten Lage oder nach dem Abscheiden mehrere Lagen eine Lasererschütterungsverdichtung oder Ultraschalleinwirkungsbehandlung des oder der Randbereiche (19) zu einer Oberfläche des Bauteils erfolgt.

6. Verfahren nach einem der vorhergehenden Ansprüche,
**dadurch gekennzeichnet, dass**
nach dem Aufbringen einer Lage und vor dem Verdichten des Randbereichs zu einer Oberfläche ein Nachschweißen des Randbereichs (19) der aufgebrachten Lage erfolgt.

7. Verfahren nach einem der vorhergehenden Ansprüche,
**dadurch gekennzeichnet, dass**
der hochenergetische Strahl (13) ein Laser - oder Elektronenstrahl ist.

8. Verfahren nach einem der vorhergehenden Ansprüche,
**dadurch gekennzeichnet, dass**
das Pulver in einem Pulverbett (12) auf das bereits erzeugte Halbzeug oder Substrat aufgebracht wird.

9. Verfahren nach Anspruch 8,
**dadurch gekennzeichnet, dass**
das bereits erzeugte Bauteil während der Verdichtung bis auf einen Bereich, auf dem die nächste Lage aufgebracht werden soll, in dem Pulverbett (12) angeordnet ist, oder um die im Randbereich zu verdichtenden Lagen aus dem Pulverbett herausgehoben wird.

10. Verfahren nach einem der vorhergehenden Ansprüche,
**dadurch gekennzeichnet, dass**
bei der Ultraschalleinwirkungsbehandlung ein auf die Oberfläche des Bauteils einwirkendes Werkzeug (17) so linear hin und her bewegt wird, dass ein Richtungsanteil der Linearbewegung parallel zur Oberflächennormale verläuft.

11. Verfahren nach einem der vorhergehenden Ansprüche,
**dadurch gekennzeichnet, dass**
bei der Ultraschalleinwirkungsbehandlung ein auf die Oberfläche des Bauteils einwirkendes Werkzeug (17) verwendet wird, das aus einem Material gebildet ist, das zu dem Material, aus dem das Bauteil aufgebaut wird, identisch ist oder in der Weise ähnlich ist, dass die Materialien derselben Werkstoffklasse angehören, demselben Legierungstyp entsprechen oder quantitativ und/oder qualitativ in ihrer chemischen Zusammensetzung zu mehr als 50 %, vorzugsweise zu mehr als 75 %, insbesondere zu mehr als 90 % übereinstimmen.

12. Verfahren nach einem der vorhergehenden Ansprüche,
**dadurch gekennzeichnet, dass**
das hergestellte Bauteil einer Wärmebehandlung unterzogen wird.

13. Vorrichtung zur generativen Herstellung von Bauteilen durch schichtweises Verbinden von Pulverpartikeln untereinander und/oder mit einem bereits erzeugten Halbzeug oder Substrat durch selektive Wechselwirkung der Pulverpartikel mit einem hochenergetischen Strahl (13), insbesondere nach einem Verfahren nach einem der vorhergehenden Ansprüche, mit einer Bestrahlungseinrichtung zur Bereitstellung eines hochenergetischen Strahls und einem Bearbeitungsbereich, in dem eine Pulverschicht angeordnet werden kann, wobei der hochenergetische Strahl und der Bearbeitungsbereich relativ zueinander bewegbar sind, sodass der hochenergetische Strahl selektiv mit einem Pulver im Bearbeitungsbereich wechselwirken kann,
**dadurch gekennzeichnet, dass**
die Vorrichtung weiterhin mindestens eine Ultraschalleinwirkungseinrichtung (16) zur Durchführung einer Ultraschalleinwirkungsbehandlung aufweist, die ein Werkzeug (17) zur Einwirkung auf ein herzustellendes Bauteil aufweist und so ausgebildet ist, dass das Werkzeug im Bearbeitungsbereich verfahrbar ist, sodass jedes beliebig geformte Bauteil im Bearbeitungsbereich an seiner Oberfläche bearbeitbar ist.

14. Vorrichtung nach Anspruch 13,
**dadurch gekennzeichnet, dass**
im Bearbeitungsbereich ein Pulverbett (12) vorgesehen ist, wobei das Werkzeug (17) so ausgebildet ist, dass das Werkzeug im Pulverbett angeordnet und betrieben werden kann.
